# EUROPEAN PATENT SPECIFICATION

(11) **EP 0 926 065 B1**
(45) Date of publication and mention of the grant of the patent: **09.07.2003**
(21) Application number: 98123384.4
(22) Date of filing: 09.12.1998
(51) Int. Cl.: B64D 11/00

(54) **Sleeping berth arrangement in aircraft**
Flugzeugbettanordnung
Couchette pour aéronef

(30) Priority: 16.12.1997 US 991340
(43) Date of publication of application: 30.06.1999
(73) Proprietor: Rajasingham, Arjuna Indraeswaren, Dr., 103 34 Stockholm (SE)
(72) Inventor: Rajasingham, Arjuna Indraeswaren, Dr., 103 34 Stockholm (SE)

(56) References cited:
- WO-A-96/14243
- FR-A- 2 747 968
- US-A- 4 071 210
- US-A- 4 440 439
- US-A- 4 589 612

## Description

### BACKGROUND OF INVENTION

Passenger Aircraft have evolved since their invention by the Wright Brothers, from the single seat vehicle to the giant passenger aircraft of today, with little change in the flexibility of passenger posture or positioning. Moreover as a result, there has been little incremental efficiency that has been possible in the process of embarking and disembarking the aircraft and for major changes in safety arrangements in the event of a crisis. The governing paradigm for passenger aircraft design is that there should be seats that passengers are assigned to and this becomes their "home" during the flight with some movement in the cabin permitted. Movement though is not always easy particularly in the Economy cabins of such aircraft where seats are closely spaced to maximize space utilization. As a result only "aisle passengers" get access to easy movement. Second, such closely spaced seats prevent the possibility of horizontal positioning of the seats except with the less efficient spacing that First and possibly Business Class offer.
Sleep on an aircraft in the current context is an important consideration particularly in Trans-continental flights that could take anywhere from five hours to over twenty hours in the air. Many passengers avoid travel rather than sleep on "red eye" flights.
This invention defines an innovative new structure, that allows comfortable sleep in a horizontal position, easy access for all passengers to their "homes" and improved and more efficient embarkation and disembarkation arrangements, and finally potentially better safety arrangements while in flight and in the event of a crisis than in current aircraft.

### SUMMARY OF INVENTION

This invention provides a new structure and passenger transport paradigm for accommodating passengers in aircraft with particular attention paid to the need to sleep comfortably on long flights, the need for body movement to ensure good blood circulation¹ on such flights, the need for independent access to all service facilities without being obstructed by other passengers, easy and stress free terminal arrangements for commencing and ending journeys, and the need for safety while travelling in the aircraft. Moreover, the invention facilitates the greater utilization of aircraft and airport facilities and in some embodiments makes redundant the entire baggage handling facilities and equipment. In addition it defines a system that allows interchangeable utilization of cargo and passenger components in aircraft. In addition to the physical structures in this invention, it provides a new concept in billing passengers for travel - an approach that is complementary to conventional ticketing for multi-class travel but creates greater efficiency of utilization of resources on the aircraft with appropriate pricing. Finally, the invention incorporates a new expeditious approach for aircraft crisis management in the event of the need for an emergency evacuation of the aircraft.
¹ Poor blood circulation resulting from restricted movement may cause blood clots/ thrombosis that can lead to medical complications and in extreme cases death.

### DRAWING DESCRIPTION

Drawings are attached in the Appendix and are described below.

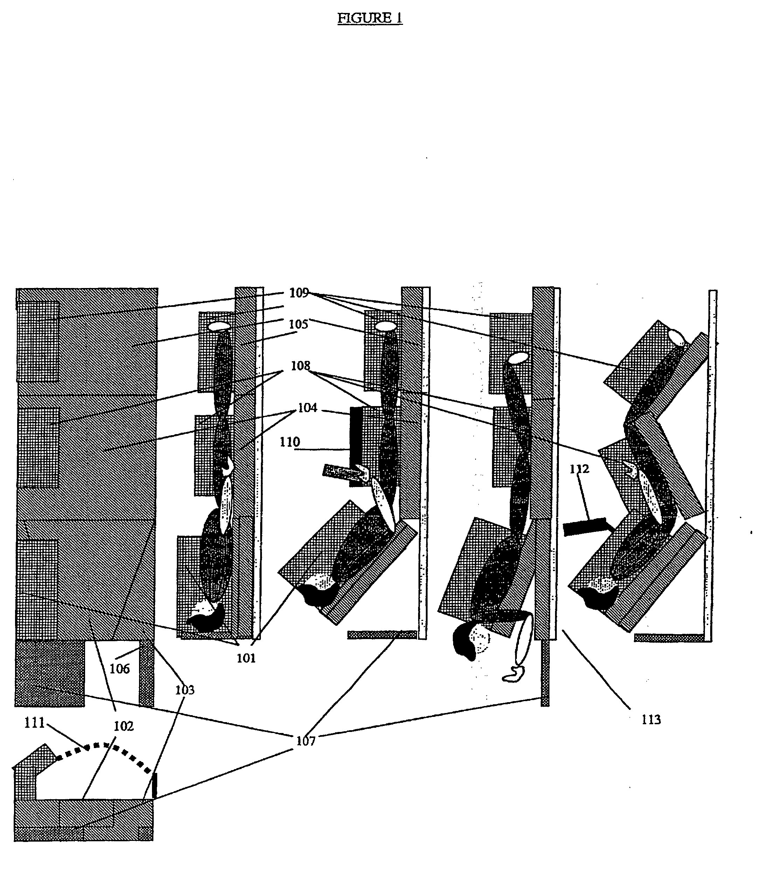

### FIGURE 1 - EMBODIMENT WITH INTERNAL FACING AIR SLEEPER.

This embodiment has the passengers facing inwards with their feet at the center of the Air Sleeper Family (as defined below) and their heads at the entrance of the Air Sleeper. There are three sections for the Sleeper: The upper section (2), the mid section (4), and the lower section (5). Similarly there are three sections of the Safety Bumper : the Upper Safety Bumper (1), the Middle Safety Bumper (8) and the lower Safety Bumper (9). Safety Straps (11) may be deployed on each of the Safety Bumpers, but need not be tightened around the passenger or even contact the passenger under normal operation.
Sections (3) are separate from the Upper Air Sleeper section to support arms when facing out of the Air Sleeper - for example while eating. The Flap (7) serves two functions - A Tabletop convenient for eating and also a seat when boarding the Air Sleeper. Climbing Rungs (6) are spaced about 18 inches apart and may be folded in when not in use. With that spacing one rung is adequate for boarding the second tier of Air Sleepers. Three rungs will be usually used to board the third tier of Air Sleeper.

A Tabletop (10) may fold into the Middle Safety Bumper. The Amenities Console (12) may be mounted on the Upper Safety Bumper.

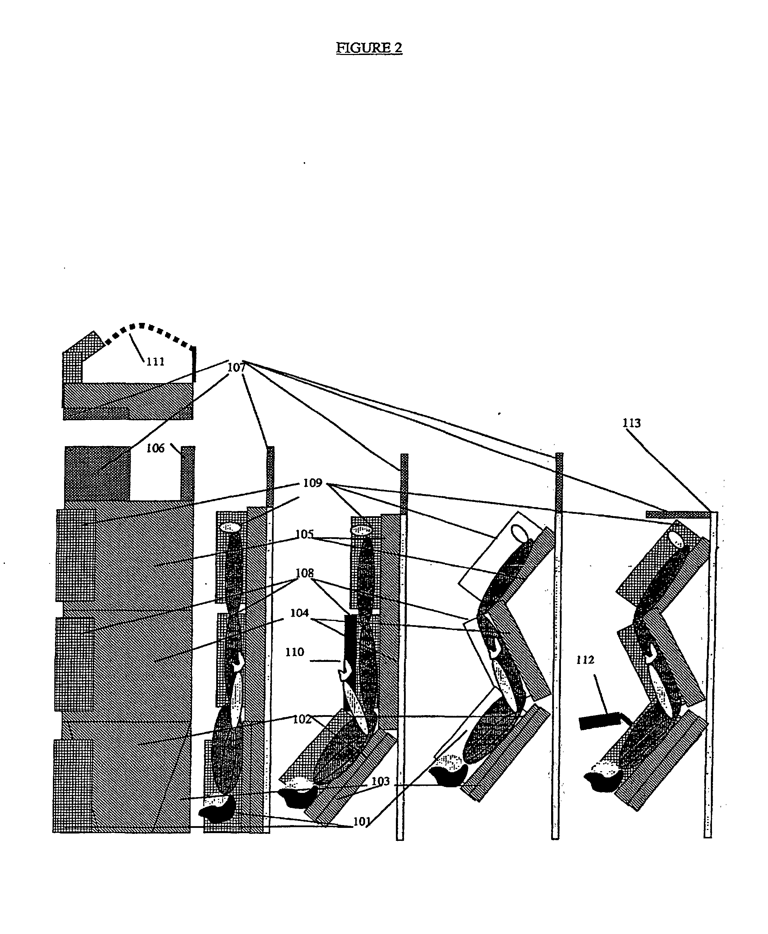

### FIGURE 2 - EMBODIMENT WITH EXTERNAL FACING PASSENGERS

This embodiment has the passengers facing outwards with their feet at the entrance of the Air Sleeper. There are three sections for the Sleeper: The upper section (2), the mid section (4) and the lower section (5). Similarly there are three sections of the Safety Bumper: the Upper Safety Bumper (1), the Middle Safety Bumper (8) and the lower Safety Bumper (9). Safety Straps (11) are deployed on each of the Safety Bumpers, but need not be tightened around the passenger or even contact the passenger under normal operation.
Sections (3) are separate from the Upper Air Sleeper section to support arms when facing into the Air Sleeper Family - for example while conversing with others on the opposite bank of Air Sleepers. The Flap (7) serves two functions - A Tabletop and also a seat when boarding the Air Sleeper. Climbing Rungs (6) may be spaced about 18 inches apart and may be folded in when not in use. With that spacing one rung is adequate for boarding the second tier of Air Sleepers. Three rungs will be usually used to board the third tier of Air Sleeper.

A Tabletop (10) I included. This may fold into the Middle Safety Bumper. The Amenities Console (12) houses necessary services. This may be mounted on the Upper Safety Bumper.

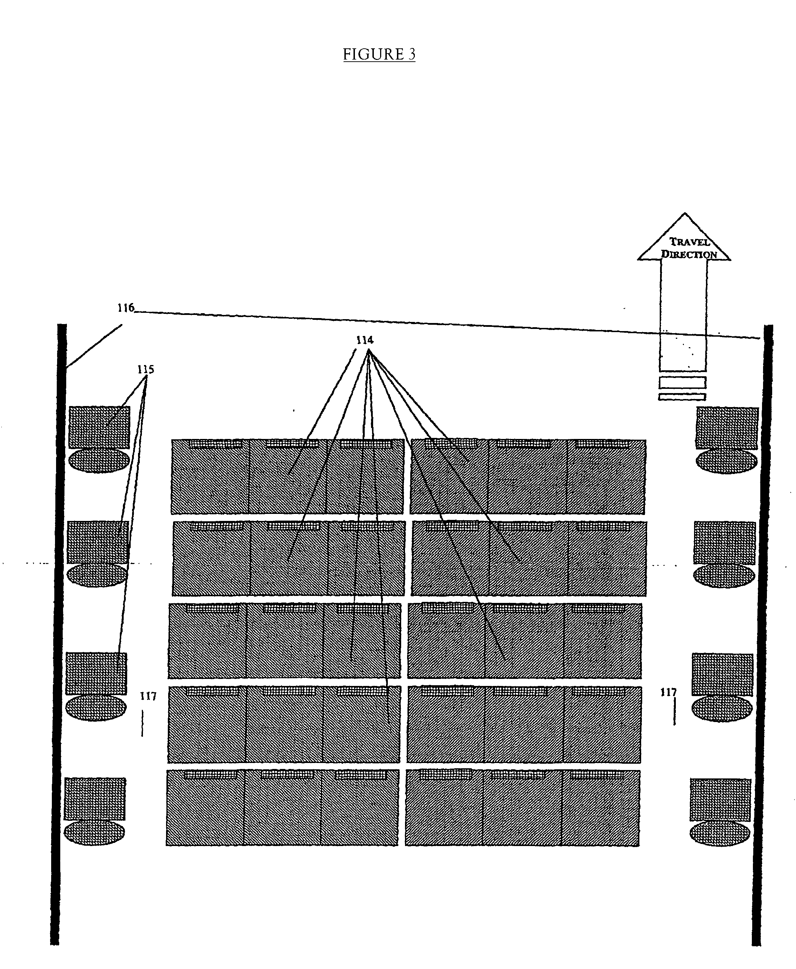

### FIGURE 3 - EMBODIMENT WITH LATERALLY ARRANGED AIR SLEEPER STACKS.

This Figure illustrates a Plan View of a possible deployment of Air Sleepers in the Aircraft Fuselage. The Air Sleepers (1) in this embodiment are laterally deployed. It may be observed that the Safety Bumpers are on the forward side of each of the Air Sleepers to protect passengers in the event of a rapid deceleration when they are in any of the possible positions.
There are seats (2) that may be deployed on the side of the Aisle to allow passengers an option to sit near a window. This may be a surrogate "Lounge" for Economy Class. First and Second Class may have separate lounges
The Shell of the Aircraft is illustrated in (3) and (4) is the Aisle.

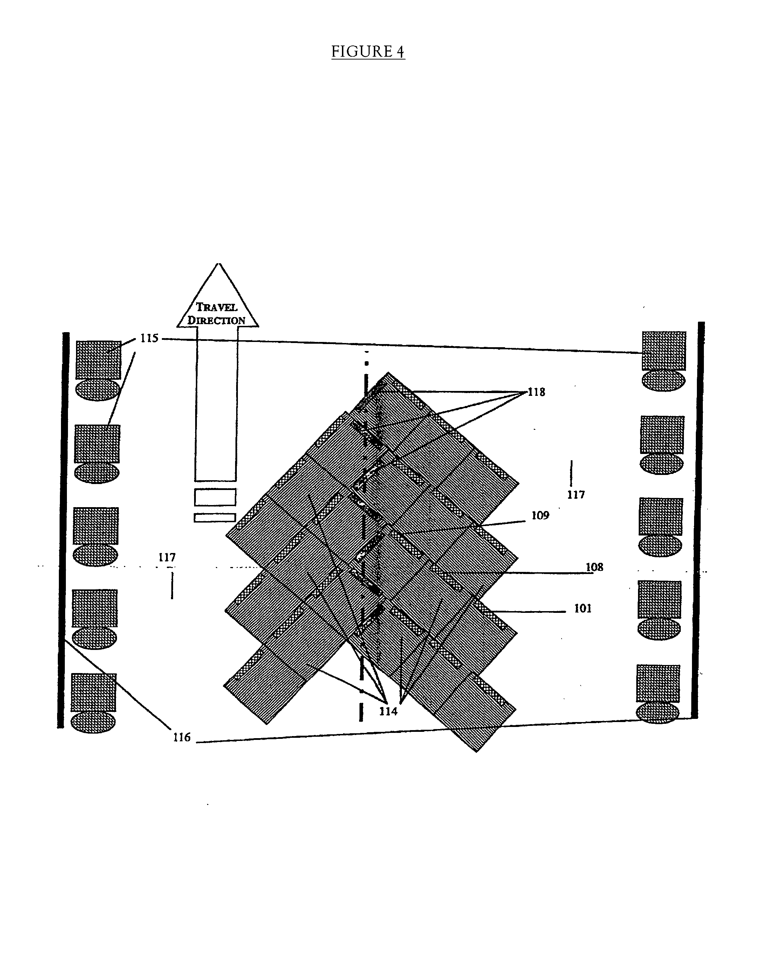

### FIGURE 4 - EMBODIMENT WITH DIAGONALLY ARRANGED AIR SLEEPERS WITH PASSENGERS FACING FORWARDS.

This Figure illustrates a possible deployment of Air Sleepers in the Aircraft Fuselage. The Air Sleepers (1) in this embodiment are deployed diagonally with passengers facing forwards.
It may be observed that the Safety Bumpers are on the forward side of each of the Air Sleepers to protect passengers in the event of a rapid deceleration when they are in any of the possible positions.
It is preferable to have passengers facing forward towards the direction of motion (at 45 degrees to this direction here) to ensure that in the event of rapid deceleration passengers are forced against the Safety Bumpers(5) and the Foot Bumpers (6). Orientation of passengers facing the direction opposite the direction of travel, will imply that in the event of rapid deceleration, passengers will be forced against the Safety Bumpers but also are exposed to the possibility of being drawn out of the Air Sleepers onto the Aisles.

There are seats (2) that may be deployed on the side of the Aisle to allow passengers an option to sit near a window. This may be a surrogate "Lounge" for Economy Class. First and Second Class may have separate lounges.
The Shell of the Aircraft is illustrated in (3) and (4) is the Aisle.

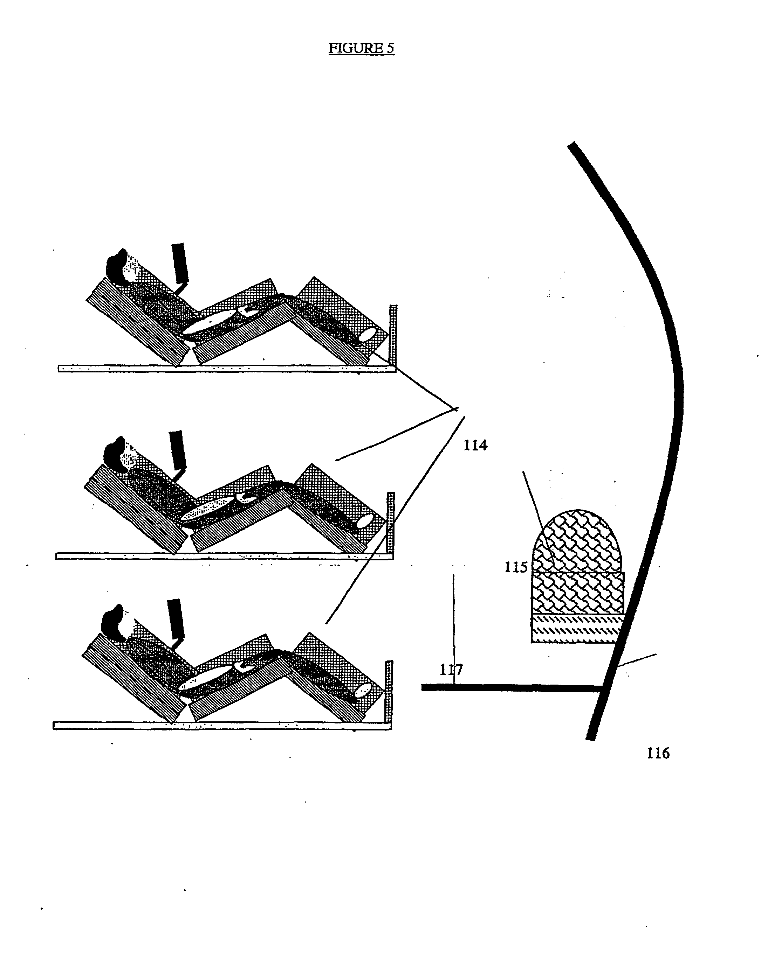

### FIGURE 5 - AIR SLEEPER EMBODIMENT - THREE TIERS.

This figure illustrates a three tier deployment of Air Sleepers (1) and shows the relative positions of the Passenger Cabin Floor (2) the seat on the side of the Aisle (3) and the Fuselage wall (4).

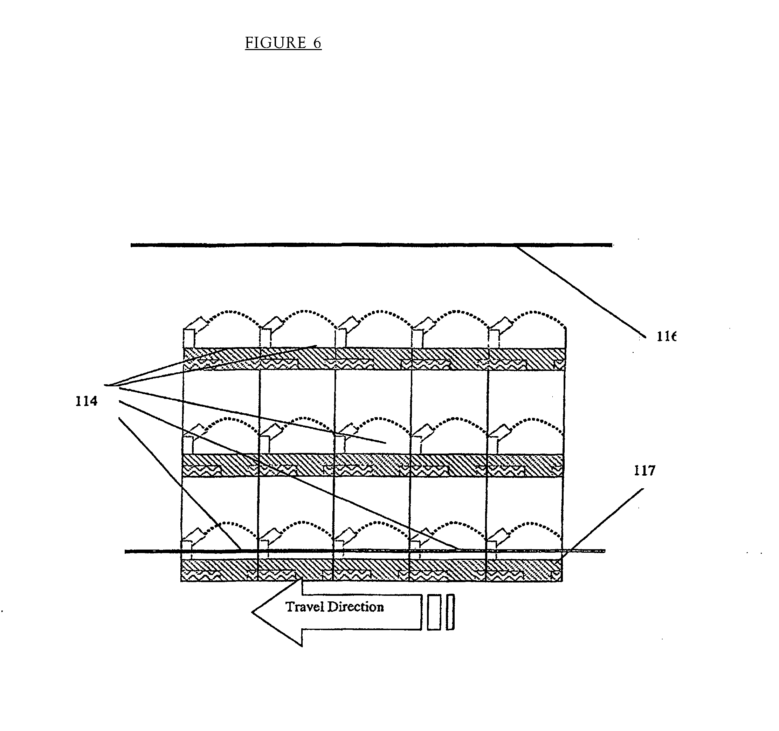

### FIGURE 6 - AN EMBODIMENT OF THE AIR SLEEPER FAMILY.

This figure illustrates an embodiment of the Air Sleeper Family. The Air Sleepers (1) are configured here in three tiers and in five rows. This is duplicated on the other side (not seen in this elevation view). The ceiling (2) and the floor (3) of the Aircraft cabin are shown.

### DETAILED DESCRIPTION OF THE INVENTION

Current passenger aircraft design utilizes as the normal travelling environment for passengers, seats that are capable of reclining to a limited extent. Such seats limit the ability of passengers to sleep in a horizontal position. First because of limited space that is available in this configuration. Allowing conventional seats to recline to a horizontal position would imply that the utilization of space is markedly reduced. Moreover, there could be limited access to some passengers when others are in the horizontal position if such arrangements are possible. Second, there is a serious compromise in safety for passengers lying horizontally facing the direction of flight. In the event of rapid deceleration as in a crash landing, such passenger lap safety belts may not be effective.

In this innovation I claim that -- the Air Sleeper --provides a structure that:
1. Allows passengers to sleep in a horizontal position when desired with no compromises to fellow passengers.
2. Provides in some embodiments a high utilization of space: Provides sleeping accommodation for 90-100 percent of passengers accommodated in conventional economy class seats within the same "footprint" or floor area on an aircraft.
3. Allows independent access to each passenger to his/her Air Sleeper. All Air Sleepers may have aisle access.
4. Allows passengers to sit up or recline when desired without any inconvenience to other passengers.
5. Provides excellent protection in the event of rapid deceleration of the aircraft as in a crash or emergency landing, whatever the position of the passenger at the time on the Air Sleeper. This includes the horizontal sleeping position.

This invention is of particular value for long haul Trans continental and intercontinental flights. The invention does not compromise safety arrangements with the new configuration.

In addition the new passenger transport paradigm in this invention, defines designated areas in the aircraft for use as lounges. These lounges will effectively segment the passenger market into multiple classes of travel focussing on the key factor for such segmentation-socialization into preferred groups of passengers. To maintain high utilization of space for economy passengers, lounge space may be limited. On the other hand first class passengers may even have dining tables at which meals can be served and spacious lounges for relaxing with company.

The invention defines a new structural feature in aircraft that provides windows on the upper part of the fuselage which create "Penthouse" Air Sleepers with better external views - Particularly suited for chlostrophobic passengers and premium passengers.

The invention defines partitions for the privacy of groups of passengers who desire such arrangements. The natural structure of the Air Sleeper facilitates communication among passengers - not simply with adjoining Air Sleepers but those in the opposite row of Air Sleepers as well. This is particularly so in the configuration with Internal Facing sleepers.
The invention provides within this paradigm, individualizable services with the Amenities Module and folding tabletop. The Amenities module in some embodiments provides each passenger with independent access to a controllable Air supply, Video screen, sound and video headset connections, Telephone and intercom within plane for service calls. Aircraft status indicators, lights and other amenities.

The invention defines a structure - the Air Sleeper Family. A structure that has multiple Air Sleepers constructed in groups, and accommodated axially in the fuselage of the aircraft. The construction permits the removal of such Families from the Aircraft either by engaging slides on the aircraft floor with rollers/wheels or alternative mechanisms.

This invention provides a new paradigm for passenger embarkation and disembarkation. Air Sleeper Families may be unlocked and removed from the aircraft and slide or roll into place or out of the Aircraft through large axial doors² . Such Air Sleeper Families may in some embodiments be boarded in the comfort of airport lounges following security checks. Passengers may then be transported in their Air Sleepers through processing centers for travel formalities and finally transported to the interior of the aircraft where the Air Sleeper Families are locked in place for travel. As a result of these innovations the utilization of the aircraft and the airport facilities are increased. Aircraft structures as defined in this invention are still compatible with airports without the facilities that are defined herein. This invention and its passenger transport paradigm extend to other forms of passenger transport such as trains and busses.
² Such doors will be similar to Cargo Doors.

The invention supports easy conversion of the aircraft for cargo duty and mixed passenger and cargo duty.

Finally, the invention provides a paradigm that supports a new more efficient market segmentation mechanism as an alternative and complement to the conventional discrete multi-class travel.

### PREFERRED EMBODIMENT OF CLAIMS:

The preferred embodiment of the Air Sleeper is a structure that:
1. Allows passengers to sleep in a horizontal position when desired with no compromises to fellow passengers.
2. Provides in some embodiments a high utilization of space: Provides sleeping accommodation for 90-100 percent of passengers accommodated in conventional economy class seats within the same "footprint" or floor area on an aircraft.
3. Allows independent access to each passenger to his/her Air Sleeper. All Air Sleepers may have aisle access.
4. Allows passengers to sit up or recline when desired without any inconvenience to other passengers.
5. Provides excellent protection in the event of rapid deceleration of the aircraft as in a crash or emergency landing, whatever the position of the passenger at the time on the Air Sleeper. This includes the horizontal sleeping position.

The embodiment shall have designated areas in the aircraft for use as lounges. These lounges will effectively segment the passenger market into multiple classes of travel focussing on the key factor for such segmentation - socialization into preferred peer groups. To maintain high utilization of space for economy passengers, lounge space will be limited. On the other hand first class passengers shall have dining tables at which meals can be served and spacious lounges for relaxing with company. Such arrangements will still maintain the passenger capacity of the aircraft.

"Penthouse" Air Sleepers with better external views - particularly suited for chlostrophobic passengers and premium passengers, will be a part of the structure on the top layer of Air Sleepers.

There shall be partitions for the privacy of groups of passengers who desire such arrangements. The natural structure of the Air Sleeper facilitates communication among passengers - not simply with adjoining Air Sleepers but those in the opposite row of Air Sleepers as well. This is particularly so in the configuration with Internal Facing sleepers.

Each Air Sleeper shall have individualizeable services with the Amenities Module and folding tabletop. The Amenities module provides each passenger with independent access to a controllable Air supply, Video screen, sound and video headset connections, Telephone and intercom within plane for service calls, Aircraft status indicators, lights and other amenities.

The embodiment shall be implemented with Air Sleeper Families-- A structure that has multiple Air Sleepers constructed in groups, and accommodated axially in the fuselage of the aircraft. The construction permits the removal of such Families from the Aircraft by engaging slides and rollers/wheels on the aircraft floor.

The Air Sleeper Families, may be unlocked and removed from the aircraft and slide or roll into place or out of the Aircraft through large axial doors³. Such Air Sleeper Families can be boarded in the comfort of airport lounges⁴ following security checks. Passengers may then be transported in their Air Sleepers through processing centers for travel formalities and finally transported to the interior of the aircraft where the Air Sleeper Families are locked in place for travel. As a result of these innovations the utilization of the aircraft and the airport facilities are increased. Aircraft structures as defined in this invention are still compatible with airports without the facilities that are defined herein. The Air Sleeper Families may be accommodated is specially designed busses and trains.
³ Such doors will be similar to Cargo Doors.
⁴ When such Airport facilities are available.

The structure of the Air Sleeper Family in this embodiment will allow easy conversion of the aircraft for cargo duty and mixed passenger and cargo duty.
This embodiment will price Air Sleepers at three rates - First, Second and Economy Class. Penthouse Air Sleepers will be charged at super premium rates. Passengers will have access to all lounges with the use of EFT Credit card devices to charge them for the desired level of usage of each of the lounges. The tariffs will be refined on usage of each lounge and demand at the offered price.

## Claims

1. Structure for passenger protection (114) in a vehicle comprising:
means for providing said passenger with adjustable physical support which gives said passenger discretionary ability to attain at least one horizontal sleeping posture, and a sitting posture wherein
said structure permits said passenger to attain said substantially horizontal posture and said sitting posture while supported by said adjustable support means, and
said structure having a plurality of elements along at least one side of said physical support means mounted on at least one side of said passenger,
**characterized in that**
at least two of said plurality of elements each are safety bumpers (101/108/109), that provide said passenger adequate safety measures under severe deceleration of said vehicle in the normal direction of travel of said vehicle, said safety bumpers being mounted substantially ahead of said passenger with regard to the direction of motion of said vehicle.

2. Structure for passenger protection in a vehicle as in claim 1, wherein one of the safety bumpers has at least one strap (111) attached thereto, and to the physical support means opposite said safety bumper, thereby providing a restraining surface in the event of rapid downward deceleration of said vehicle, and providing guidance for the passenger's body towards said safety bumper and said physical support means in the event of rapid deceleration of said vehicle along axis of motion.

3. A structure as in claim 1, wherein the means providing said passenger with adjustable physical support, comprises at least one sleeper section having two opposite edges that are the lead edge and the trail edge, of said sleeper section and wherein said lead edge of said sleeper section is oriented towards the head of said passenger, and said trail edge of said sleeper section is oriented towards said foot of said passenger's body, such that the sleeper section lies across and below the passenger, said at least one sleeper section being pivotally mounted to a fixed or slidably mounted attachment to the vehicle, whereby said sleeper section(s) can be moved at the discretion of said passenger with angular displacements resulting from pivotal angular displacement about said pivotal mount, and longitudinal displacements in the direction of the length of the structure for passenger protection resulting from longitudinal movement allowed by said fixed or slidably mounted attachments to the vehicle, thereby permitting passenger control of the elevation of one or more of the lead edge and trail edge of said sleeper section(s), to positions of comfort for the passenger.

4. A structure as in claim 1, wherein at least one safety bumpers is constructed to be deployed beside the passenger on one side of the passenger's body within said structure and said one of said safety bumpers is constructed to be directly or indirectly attached to one of said sleeper sections when the vehicle is operational.

5. A structure as in claim 1, wherein said structure is supported by a plurality of frame and support beams mounted rigidly to the vehicle.

6. A structure as in claim 2, wherein said strap (111) in said structure is composed of a semi rigid material that has sufficient rigidity to allow deployment away from the passengers body.

7. A structure as in claim 3, wherein there are three sleeper sections arranged along the length of the body of said passenger and each laterally across the body of said passenger wherein said sleeper sections are respectively the sleeper head section, the sleeper middle section and the sleeper foot section, and wherein when the passenger lies horizontally on said sleeper sections, the head and upper body are substantially supported by the sleeper head section, the pelvis and the upper leg is substantially supported by the sleeper middle section and the lower leg and feet are substantially supported by the sleeper foot section, while maintaining the passenger in a position entirely within said structure.

8. A structure as in claim 7, further comprising arm rests constructed on both sides of said sleeper head section but to lie entirely within the said structure, and each hingedly mounted to the said sleeper head section, thereby permitting said passenger to pivotally raise the sleeper head section by a positive and upward angular displacement relative to the sleeper middle section, while keeping the said arm rests attached to said raised sleeper head section, at a smaller angular displacement from the said sleeper middle section, thereby said sleeper head section providing support for the upper torso and head at a higher level than support provided by said arm rests for the arms of said passenger.

9. A method for providing safe accommodation for a passenger in a vehicle comprising:
supporting in a vertical direction, all of the head, torso, upper legs and lower legs of said passenger, said head, torso, upper legs and lower legs of said passenger being in relative angular orientations and heights preferred by said passenger ( Fig 1 and Fig 2);
**characterized by**
supporting with a soft surface, a large surface area of one or more of the head, torso and upper legs of the side of said passenger in the direction of motion of the vehicle in the event of a rapid deceleration of the vehicle along its axis of travel, thereby reducing the force per unit area on the body of said passenger in decelerating said passenger during said deceleration of said vehicle.

10. A method for providing safe accommodation for a passenger in a vehicle as in claim 9, further comprising , supporting said passenger in a vertical downward direction in the event of acceleration of said vehicle in a downward direction.

11. A structure as in claim 1, said structure supported by a vehicle support attached to said vehicle, and comprising at least one table top mounted to the vehicle support of said structure, whereby the inclination of said table top is maintained horizontal relative to said vehicle.

12. A plurality of structures as in claim 1, wherein said structures (114) each have a head end oriented towards the head of the passenger and a foot end oriented towards the feet of the passenger and an axis of orientation directed from the foot end of each of said structures to the head end of that structure, and wherein said structures are each oriented with said axes of orientation of said structures substantially parallel to each other and said structures are oriented in a nested fashion within said vehicle.

13. A structure as in claim 12, wherein said structures are positioned within said nested arrangement, such that said passenger has independent access to said structure from common areas of the vehicle, without incursion into the structure of any other passengers, thereby not compromising the preferred posture of any other passengers in their respective said structures, in said vehicle.

14. A plurality of structures as in claim 12, wherein said nested structures 114 are further nested vertically in a plurality of tiers with said head ends of said structures in each tier substantially in the vicinity of the head ends of the structures in the other tiers and with said foot ends of structures in each tier substantially in the vicinity of the foot ends of the structures in the other tiers (Fig 5 and Fig 6).

15. A plurality of structures as in claim 12, wherein the axes of said structures from the foot end to the head end of said structures are arranged at a predetermined angle to the direction of motion of the vehicle, said structures (114) being oriented to position the head of the passenger not ahead of the foot of the passenger with regard to the direction of motion of the vehicle when said passenger is in the normal position in the structure ( Fig 4).

16. Two sets of structures as in claim 14, wherein the two sets of structures are arranged back-to-back wherein either the foot ends of the first of said two sets of structures are substantially adjoining the foot ends of the second of the two sets of structures or the head ends of first of said two sets of structures are substantially adjoining the head ends of the second of the two said sets of structures, and said two sets of structures are at substantially the same horizontal level, thereby said two sets of structures forming families of air sleepers along the axis of said vehicle.

17. A structure as in claim 15, wherein said predetermined angle is 90 degrees.

18. Two structures (114) as in claim 15, wherein said structures are arranged back-to-back wherein the foot ends of the first of the said two structures are substantially adjoining the foot ends of the second of the said two structures such that said predetermined angle ensures that the surface of contact of structures that are back-to-back are further forward relative to the direction of motion of the vehicle than the two further ends of the structures in each of said two structures ( as in Fig 4), thereby ensuring that in the event of rapid deceleration of the vehicle said passengers are pushed into their structures rather than ejected out of said structures.

19. A structure as in claim 1, oriented in said vehicle such that when said passenger is in said structure, the head of said passenger is located behind the foot of said passenger in the axial direction of the vehicle motion under normal operation, and wherein said structure has a foot bumper mounted at the edge of said structure facing the feet of said passenger, whereby in the event of rapid deceleration of the vehicle, said passenger is supported by safety devices including said foot bumper.

20. A vehicle with a plurality of structures as in claim 14, said vehicle further comprising windows on the vehicle body above the top tier of the said tiers of structures, thereby creating a penthouse tier of structures at the top tier.

21. A plurality of structures as in claim 14, attached to frame and support beams, further comprising climbing rungs mounted to a frame and support beams, thereby allowing said passengers to climb to the higher habitats in each of said tiers.

22. A structure as in claim 13, further comprising at least one retractable utility flap positioned at an entrance of the structure, thereby providing one or more of the following functions:
a) an additional tabletop;
b) a utility seat that is usable when entering said habitat.

23. A plurality of structures as in claim 14, wherein the vertical and horizontal displacement of structures relative to each other within said tiers of nested arrangements, are arranged such that the internal volume required by the said structures in said vehicle are minimized.

24. A plurality of families of structures as in claim 16, arranged in tiers with frame structures, and mounted on lockable devices that when unlocked, allow movement of the said frame structures within the vehicle and out of the vehicle though doors.

25. Tiers of families of structures supported by said frame structure as in claim 24, wherein said frame structure with mounted structures may be wheeled on suitable vehicles into and out of at least one of passenger service facilities in airports and other aircraft, whereby passengers need not dismount from their structures, and conduct all their interactions from said structures.

26. Tiers of families of structures as in claim 25, wherein baggage racks for each of the passengers are mounted in the vicinity of said passenger's structure, thereby facilitating the handling of luggage with passenger movements.

27. A plurality of structures mounted in frames as in claim 24, wherein said plurality of structures are interchangably mounted in vehicles with container of cargo, and other passenger service facilities including galleys, toilets and lounges.

28. A plurality of structures as in claim 24, wherein said plurality of structures further comprise at least one of systems of parachutes and a safety life raft that will protect said plurality of structures as an integral unit in emergencies, so that said plurality of structures may be unlocked and ejected from the vehicle in times of crisis including emergencies.

29. A structure as in Claim 1 wherein said vehicle is an aircraft.

30. A structure as in claim 1, further comprising at least one amenities console, comprising at least one of the following functions:
a) independently controllable air supply;
b) video screen;
c) sound headset connection;
d) video headset connection;
e) telephone;
f) video/audio intercom;
g) aircraft status indicators;
h) lights; and
i) video conferencing camera and hardware.

31. A plurality of structures as in claim 16, wherein said structures are relatively positioned in each said families to facilitate communities of passengers to interact face to face and laterally across adjacent structures, thereby facilitating conference.

32. A plurality of structures as in claim 12, in a vehicle further comprising additional areas of the vehicle that are common to passengers called lounges, said lounges providing a range of facilities that passengers desire while travelling.

## Patentansprüche

1. Struktur für den Schutz von Passagieren (114) in einem Fahrzeug bestehend aus:
Vorrichtungen, mit denen dem Passagier eine verstellbare physikalische Abstützung ermöglicht wird, die dem besagten Passagier nach seinem Ermessen die Möglichkeit gibt, mindestens eine horizontale Schlafposition und eine Sitzposition zu erreichen, wobei
besagte Struktur dem Passagier ermöglicht, diese im wesentlichen horizontale Stellung und die besagte Sitzposition zu erreichen, in dem er von diesen besagten verstellbaren Stützvorrichtungen gestützt wird und
wobei besagte Struktur mit einer Vielzahl von Elementen entlang wenigstens einer Seite der besagten physikalischen Stützvorrichtung versehen ist, die auf mindestens einer Seite des besagten Passagiers befestigt sind.
**Dadurch gekennzeichnet, dass**
es sich bei mindestens zwei dieser besagten Vielzahl von Elementen um Stoßfänger (101/108/109) handelt, die dem besagten Passagier ausreichende Sicherheitsmaßnahmen bei einer starken Geschwindigkeitsabnahme des besagten Fahrzeugs in der normalen Fahrtrichtung des besagten Fahrzeugs bieten, wobei besagte Stoßfänger im wesentlichen vor dem besagten Passagier in bezug auf die Bewegungsrichtung des besagten Fahrzeugs montiert sind.

2. Struktur für den Schutz von Passagieren in einem Fahrzeug gemäß Anspruch 1, wobei mindestens ein Gurt (111) an diesem Stoßfänger und an der physikalischen Stützvorrichtung gegenüber des besagten Stoßfängers befestigt ist, wobei eine Rückhaltefläche im Falle einer schnellen Geschwindigkeitsabnahme des besagten Fahrzeugs gebildet und dem Körper des Passagiers Führung in Richtung auf besagten Stoßfänger und besagter physikalischen Stützvorrichtung im Falle einer rapiden Geschwindigkeitsabnahme des besagten Fahrzeugs entlang der Bewegungsachse gegeben wird.

3. Eine Struktur gemäß Anspruch 1, in der die Vorrichtung, die dem besagten Passagier die verstellbare physikalische Abstützung liefert, mindestens einen Schlafbereich beinhaltet, der zwei gegenüberliegende Kanten aufweist, bei denen es sich um die Vorderkante und die Hinterkante des besagten Schlafbereichs handelt und wobei die besagte Vorderkante des besagten Schlafbereichs auf den Kopf des besagten Passagiers ausrichtetet ist und besagte Hinterkante des besagten Schlafbereichs auf den Fuß des Körpers des besagten Passagiers gerichtet ist, so dass der Schlafbereich oberhalb und unterhalb des Passagiers liegt, wobei der besagte, mindestens eine Schlafbereich drehbar an einer fest oder verschiebbar montierten Befestigungsvorrichtung am Fahrzeug befestigt ist, und besagte(r) Schlafbereich(e) nach Ermessen des besagten Passagiers mit Winkelverschiebungen, die sich aus der pivotalen Winkelverschiebung an diesem Befestigungspunkt ergeben, sowie Längsverschiebungen in Längsrichtung der Passagierschutzstruktur, die sich aus der Längsbewegung ergeben, die von diesen fest oder verschiebbar angebrachten Befestigungsvorrichtungen am Fahrzeug ergeben, bewegt werden kann, wodurch der Passagier die Kontrolle über die Erhöhung der Vorderkante oder der Hinterkante des(r) besagten Schalbereichs(e) hat, die Positionen ermöglicht, die für den Passagier komfortabel sind.

4. Eine Struktur gemäß Anspruch 1, in der mindestens ein Stoßfänger so konstruiert ist, dass er neben dem Passagier oder auf einer Seite des Körpers des Passagiers innerhalb der besagten Struktur entfaltet werden kann, und der besagte Stoßfänger außerdem so konstruiert ist, dass er direkt oder indirekt an einer der besagten Schlafbereiche befestigt werden kann, wenn das Fahrzeug betriebsbereit ist.

5. Eine Struktur gemäß Anspruch 1, in der die besagte Struktur mit einer Vielzahl von Rahmen- und Stützträgern versehen ist, die fest am Fahrzeug befestigt sind.

6. Eine Struktur gemäß Anspruch 2, in der besagter Gurt (111) in besagter Struktur aus einem halbfesten Material besteht, das über eine ausreichende Festigkeit verfügt, um eine Entfaltung weg vom Körper des Passagiers zu ermöglichen.

7. Eine Struktur gemäß Anspruch 3, in der drei Schlafbereiche entlang der Länge des Körpers des besagten Passagiers und jeweils lateral über den Körper des besagten Passagiers angeordnet sind, wobei es sich bei den besagten Schlafbereichen um den Kopfschlafbereich, den Mittelschlafbereich und den Fußschlafbereich handelt und worin, wenn der Passagier horizontal auf besagten Schlafbereichen liegt, der Kopf und der Oberkörper im wesentlichen von dem Kopfschlafbereich abgestützt, das Becken und die Oberschenkel im wesentlichen vom Mittelschlafbereich und die Unterschenkel und Füße im wesentlichen vom Fußschlafbereich abgestützt werden, wobei der Passagier in einer Position vollständig innerhalb dieser besagten Struktur gehalten wird.

8. Eine Struktur gemäß Anspruch 7, die weiterhin aus Armlehnen konstruiert ist, die sich an beiden Seiten des besagten Kopfschlafbereichs befinden, jedoch vollständig innerhalb der besagten Struktur liegen, wobei jede Armlehne gelenkig an dem besagten Kopfschlafbereich befestigt ist, wodurch dem Passagier ermöglicht wird, den Kopfschlafbereich durch eine verdrängende Aufwärts-Winkelverschiebung drehbar in bezug auf den Mittelschlafbereich zu erhöhen, wobei die besagten Armlehen an dem besagten erhöhten Kopfschlafbereich befestigt bleiben, und zwar mit einer kleineren Winkelverschiebung zum besagten Mittelschlafbereich, wodurch der besagte Kopfschlafbereich eine Abstützung für den oberen Brustkorb und den Kopf auf einer höheren Ebene bietet als die Abstützung, die von besagten Armlehnen für die Arme des besagten Passagiers erfolgt.

9. Eine Methode zur Bereitstellung eines sicheren Aufnahmeplatzes für einen Passagier in einem Fahrzeug, bestehend aus:
Abstützung in vertikaler Richtung des gesamten Kopfes, Oberkörpers, der Oberschenkel und Unterschenkel des besagten Passagiers, wobei besagter Kopf, Oberkörper, besagte Oberschenkel und Unterschenkel des besagten Passagiers sich in relativen Winkelausrichtungen und Höhen befinden, die von dem Passagier bevorzugt werden (Abb. 1 und Abb. 2);
**Dadurch gekennzeichnet, dass**
mit einer weichen Oberfläche ein großen Flächenbereich von entweder Kopf, Oberkörper oder Oberschenkeln (einer, mehrere oder alle zusammen) der Seite des besagten Passagiers in Bewegungsrichtung des Fahrzeugs im Falle einer rapiden Geschwindigkeitsabnahme des Fahrzeugs entlang seiner Fahrachse abgestützt wird, wodurch sich die Kraft pro Flächeneinheit auf den Körper des besagten Passagiers durch Verlangsamung des besagten Passagiers während der Geschwindigkeitsabnahme des besagten Fahrzeugs reduziert.

10. Eine Methode zur Bereitstellung eines sicherer Aufnahmeplatzes für einen Passagier in einem Fahrzeug gemäß Anspruch 9, weiterhin umfassend, dass der besagte Passagier in einer vertikalen Abwärtsrichtung im Falle der Beschleunigung des besagten Fahrzeug in einer Abwärtsrichtung gehalten wird.

11. Eine Struktur gemäß Anspruch 1, wobei besagte Struktur von einem Fahrzeugträger abgestützt wird, der am besagten Fahrzeug angebracht ist, bestehend aus mindestens einer Tischplatte, die an dem Fahrzeugträger der besagten Struktur befestigt ist, wobei die Neigung der besagten Tischplatte horizontal in bezug auf das besagte Fahrzeug gehalten wird.

12. Eine Vielzahl von Strukturen gemäß Anspruch 1, in der die besagten Strukturen (114) jeweils mit einem Kopfende, das auf den Kopf des Passagiers ausgerichtet ist, und mit einem Fußende versehen sind, das auf die Füße des Passagiers und in einer Verlaufsachse ausgerichtet sind, die vom Fußende jeder der besagten Strukturen zum Kopfende dieser Struktur ausgerichtet sind, wobei die besagten Strukturen alle mit besagter Verlaufsache der besagten Strukturen im wesentlichen parallel zueinander ausgerichtet sind, und besagte Strukturen innerhalb des besagten Fahrzeugs auf verschachtelte Art und Weise ausgerichtet sind.

13. Eine Struktur gemäß Anspruch 12, in der die besagten Strukturen innerhalb der besagten verschachtelten Anordnung derart positioniert sind, dass der besagte Passagier einen unabhängigen Zugang zur besagten Struktur aus herkömmlichen Bereichen des Fahrzeugs hat, ohne dass ein anderer Passagier in die Struktur eindringt, wobei die bevorzugte Haltung anderer Passagiere in ihren entsprechenden besagten Strukturen in besagtem Fahrzeug nicht beeinträchtigt wird.

14. Eine Vielzahl von Strukturen gemäß Anspruch 12, in denen die besagten verschachtelten Strukturen 114 weiter vertikal in einer Vielzahl von Schichten verschachtelt werden, wobei besagte Kopfenden der besagten Strukturen in jeder Schicht sich im wesentlichen in der Nähe der Kopfenden der Strukturen in den anderen Schichten befinden und wobei die besagten Fußenden der Strukturen in jeder Schicht sich im wesentlichen in der Nähe der Fußenden der Strukturen in den anderen Schichten befinden (Abb. 3 und Abb. 6).

15. Eine Vielzahl von Strukturen gemäß Anspruch 12, in denen die Achsen der besagten Strukturen vom Fußende zum Kopfende der besagten Strukturen in einem vorher bestimmten Winkel in Bewegungsrichtung des Fahrzeugs angeordnet sind, wobei besagte Strukturen (114) so ausgerichtet sind, dass sie den Kopf des Passagiers nicht über den Fuß des Passagiers in bezug auf die Bewegungsrichtung des Fahrzeugs positionieren, wenn besagter Passagier sich in einer normalen Position in der Struktur befindet (Abb. 4).

16. Zwei Satz Strukturen gemäß Anspruch 14, wobei die zwei Satz Strukturen Rücken-an-Rücken angeordnet werden, und wobei entweder die Fußenden des ersten Satzes der zwei Satz Strukturen im wesentlichen an die Fußenden des zweiten Satzes der zwei Satz Strukturen oder die Kopfenden des ersten Satzes der zwei Satz Strukturen im wesentlichen an die Kopfenden des zweiten Satzes der zwei Satz Strukturen angrenzen und die besagten zwei Satz Strukturen sich im wesentlichen auf der gleichen horizontalen Ebene befinden, wodurch die zwei Satz Strukturen Gruppen aller Schlafbereiche entlang der Achse des besagten Fahrzeugs bilden.

17. Eine Struktur gemäß Anspruch 15, in der der vorher festgelegte Winkel 90 Grad beträgt.

18. Zwei Strukturen (114) gemäß Anspruch 15, wobei die Strukturen Rücken-an-Rücken angeordnet werden, und wobei die Fußenden der ersten der zwei Strukturen im wesentlichen an die Fußenden der zweiten der zwei Strukturen angrenzen, so dass der vorher festgelegte Winkel sicherstellt, dass die Kontaktfläche der Strukturen, die Rücken-an-Rücken angeordnet sind, weiter vorn in bezug auf die Bewegungsrichtung des besagten Fahrzeugs liegt als die zwei weiteren Enden der Strukturen in jeder der zwei besagten Strukturen (wie in Abb. 4 dargestellt), wodurch sichergestellt wird, dass im Falle einer rapiden Geschwindigkeitsabnahme des Fahrzeugs die besagten Passagiere in ihre Strukturen gedrückt werden und nicht aus diesen besagten Strukturen herausgestoßen werden.

19. Eine Struktur gemäß Anspruch 1, die in besagtem Fahrzeug so ausgerichtet ist, dass, wenn besagter Passagier sich in der besagten Struktur befindet, der Kopf des besagten Passagiers sich hinter dem Fuß des besagten Passagiers in axialer Richtung der Fahrzeugbewegung bei normalen Betrieb befindet, wobei besagte Struktur mit einem Fußstoßfänger versehen ist, der an der Kante der besagten Struktur befestigt ist und auf die Füße des besagten Passagiers zeigt, wobei im Falle einer schnellen Geschwindigkeitsabnahme des Fahrzeugs, besagter Passagier von Sicherheitsvorrichtungen gehalten wird, zu denen besagter Fußstoßfänger gehört.

20. Ein Fahrzeug mit einer Vielzahl von Strukturen gemäß Anspruch 14, wobei besagtes Fahrzeug weiterhin mit Fenstern im Fahrzeugkörper oberhalb der oberen Schichten der besagten Strukturschichten versehen ist, wodurch eine "Penthouse"-Schicht von Strukturen auf der oberen Schicht geschaffen wird.

21. Eine Vielzahl von Strukturen gemäß Anspruch 14, die an Rahmen- und Stützträgern befestigt sind und weiterhin mit Klettersprossen versehen sind, die an den Rahmen- und Stützträgern angebracht sind und den besagten Passagieren ermöglichen, in die höheren Schlafbereiche in jeder der besagten Schicht zu klettern.

22. Eine Struktur gemäß Anspruch 13, bestehend aus mindestens einer ausziehbaren Mehrzweckklappe, die sich am Eingang der Struktur befindet, und dadurch eine oder mehrere der folgenden Funktionen bietet:
a) ein zusätzlicher Klapptisch
b) ein Mehrzwecksitz, der bei Einstieg in den Schlafraum verwendbar ist.

23. Eine Vielzahl von Strukturen gemäß Anspruch 14, in denen die vertikale und horizontale Verschiebung von Strukturen in bezug zueinander innerhalb der besagten Schichten aus verschachtelten Anordnungen derart angeordnet ist, dass das von den besagten Strukturen benötigte Innenvolumen in besagtem Fahrzeug auf ein Minimum beschränkt wird.

24. Eine Vielzahl von Gruppen von Strukturen gemäß Anspruch 16, angeordnet in Schichten mit Rahmenstrukturen und an verriegelbaren Vorrichtungen montiert, die, wenn sie entriegelt werden, die Bewegung dieser besagten Rahmenstrukturen innerhalb des Fahrzeugs und aus dem Fahrzeug hinaus durch Türen ermöglichen.

25. Schichten von Gruppen von Strukturen, die von der besagten Rahmenstruktur gemäß Anspruch 24 gestützt werden, wobei besagte Rahmenstruktur mit montierten Strukturen auf geeigneten Fahrzeugen in mindestens eine der Personenbeförderungseinrichtungen auf Flughäfen und anderen Flugzeugen hinoder hinausgeschoben werden kann, wobei die Passagiere sich nicht aus ihren Strukturen entfernen müssen und alle ihre Interaktionen aus den besagten Strukturen durchführen können.

26. Schichten von Gruppen von Strukturen gemäß Anspruch 25, in denen Gepäckträger für jeden der Passagiere in der Nähe der besagten Passagierstruktur montiert sind, wodurch die Handhabung von Gepäck bei Passagierbewegungen erleichtert wird.

27. Ein Vielzahl von Strukturen, die gemäß Anspruch 24 in Rahmen montiert sind, wobei besagte Vielzahl von Strukturen untereinander austauschbar in Fahrzeugen mit Frachtcontainern und anderen Personenbeförderungseinrichtungen, einschließlich Kabinen, Toiletten und Lounges angebracht werden können.

28. Eine Vielzahl von Strukturen gemäß Anspruch 24, wobei besagte Vielzahl von Strukturen weiterhin wenigstens ein Fallschirmsystem und ein Rettungsfloss beinhaltet, womit besagte Vielzahl von Strukturen ale eine integrale Einheit in Notfällen geschützt werden kann, so dass besagte Vielzahl von Strukturen von dem Fahrzeug entriegelt und im Falle einer Krise und bei Notfällen aus dem Fahrzeug ausgeworfen werden kann.

29. Eine Struktur gemäß Anspruch 1 wobei es sich bei besagtem Fahrzeug um ein Flugzeug handelt.

30. Eine Struktur gemäß Anspruch 1, weiterhin bestehend aus mindestens einer Ausstattungskonsole, die mindestens eine der folgenden Funktionen aufweist:
a) unabhängig kontrollierbare Luftversorgung
b) Videobildschirm
c) Kopfhöreranschluss
d) Video-Headset-Anschluss
e) Telefon
f) Video/Audio Intercom
g) Flugstatusanzeigen
h) Lampen und
i) Videokonferenzkamera und Hardware

31. Eine Vielzahl von Strukturen gemäß Anspruch 16, wobei besagte Strukturen in jeder der besagten Gruppen in einem Verhältnis zueinander derart positioniert sind, dass Passagiergemeinschaften direkt von Angesicht zu Angesicht und seitlich über angrenzende Strukturen miteinander in Interaktion treten können, wodurch die Konferenz erleichtert wird.

32. Eine Vielzahl von Strukturen gemäß Anspruch 12, wobei das Fahrzeug weiterhin zusätzliche Bereiche des Fahrzeugs beinhaltet, die gemeinsam von den Passagieren genutzt und Lounges genannt werden, wobei besagte Lounges eine Anzahl von Einrichtungen bereithalten, die die Passagiere für die Reise wünschen.

## Revendications

1. Structure pour la protection d'un passager (114) dans un véhicule comprenant :
Les moyens pour procurer à ce passager un support physique réglable qui lui donne la possibilité d'atteindre au moins une position de sommeil horizontale, et une position assise par laquelle
ladite structure autorise à ce passager d'atteindre cette position substantiellement horizontale et cette position assise tout en étant maintenu par lesdits moyens de soutien, et
ladite structure ayant une pluralité d'éléments le long d'au moins un côté desdits moyens de soutien physique montés sur au moins un côté du passager,
**caractérisée en ce que**
deux au moins de cette pluralité d'éléments sont des coussins de sécurité (101/108/109), qui procurent au passager des mesures de sécurité adéquates sous une décélération importante du véhicule dans la direction normale de parcours dudit véhicule, ces coussins de sécurité étant montés substantiellement en amont du passager par rapport à la direction de mouvement du véhicule.

2. Structure pour la protection d'un passager dans un véhicule selon la revendication 1, dans laquelle un des coussins de sécurité possède au moins une sangle (111) qui lui est fixée, en étant également fixée aux moyens de soutien physique à l'opposé du coussin de sécurité, procurant ainsi une surface de retenue en cas de décélération rapide dudit véhicule, en guidant le corps du passager vers ce coussin de sécurité et vers ces moyens de soutien physique en cas de décélération rapide dudit véhicule le long de l'axe de mouvement.

3. Une structure selon la revendication 1, avec des moyens qui fournissent au passager un soutien physique réglable, qui comprend au moins une partie couchette possédant deux bords opposés qui représentent le bord avant et le bord arrière de ladite section couchette et par laquelle ce bord avant de cette section couchette est orienté vers la tête dudit passager, le bord arrière de cette section couchette étant orienté vers les pieds du corps du passager, de façon à ce que la section couchette s'étende le long et sous le passager, au moins une section couchette étant montée sur pivot sur une attache fixe ou coulissante au véhicule, cette ou ces section(s) couchette(s) peut(vent) être déplacée(s) à la discrétion du passager sous des déplacements angulaires autorisés par le déplacement angulaire sur pivot de ce montage pivotant, et des déplacements longitudinaux dans la direction de la longueur de la structure pour que la protection du passager soit le résultat du mouvement longitudinal autorisé par ces attaches fixes ou coulissantes sur le véhicule, permettant ainsi le contrôle du passager de la hauteur d'un ou de plusieurs bord avant ou arrière de la (des) section(s) couchette(s), sur la position confort du passager.

4. Une structure selon la revendication 1, par laquelle au moins un coussin de sécurité est construit de façon à être déployé à côté du passager sur un côté du corps dans ladite structure et ce coussin de sécurité est fabriqué pour être directement ou indirectement fixé à une des sections couchette lorsque le véhicule est en marche.

5. Une structure selon la revendication 1, par laquelle cette structure est supportée par une pluralité de châssis et de traverses montés rigidement sur le véhicule.

6. Une structure selon la revendication 2, par laquelle ladite sangle (111) de cette structure est fabriquée dans un matériau semi-rigide qui est suffisamment rigide pour pouvoir être déployé loin du corps du passager.

7. Une structure selon la revendication 3, par laquelle il y a trois sections couchette disposées le long du corps dudit passager et chacune au travers du corps du passager, ces sections couchettes sont respectivement la partie supérieure de la couchette, sa partie centrale et sa partie inférieure, suivant laquelle lorsque le passager est étendu à l'horizontale sur ces sections couchettes, sa tête et la partie haute de son corps sont substantiellement soutenues par la partie supérieure de la couchette, le pelvis et la cuisse sont substantiellement soutenus par la partie centrale de la couchette et la jambe et les pieds sont substantiellement soutenus par la partie inférieure de la couchette, tout en maintenant le passager dans une position entièrement comprise dans ladite structure.

8. Une structure selon la revendication 7, qui comprend également des accoudoirs construits des deux côtés de la partie supérieure de la couchette mais qui s'étendent entièrement dans ladite structure, chacun étant monté sur charnière sur ladite partie supérieure de la couchette, permettant ainsi au passager de relever en pivotant la partie supérieure de la couchette par un mouvement angulaire positif et vers le haut par rapport à la partie centrale de la couchette, tout en conservant les accoudoirs fixés sur la section supérieure ainsi relevée, à une distance angulaire moins grande de la partie centrale de la couchette, permettant ainsi à cette partie de tête de soutenir la partie supérieure du torse et la tête à un niveau plus élevé que le soutien fourni par ces accoudoirs destinés aux bras du passager.

9. Une méthode pour permettre à un passager de prendre place dans un véhicule en toute sécurité comprenant :
le soutien en position verticale, de toute la tête, du torse, des cuisses et des jambes du passager ; la tête, le torse, les cuisses et les jambes du passager étant orientés angulairement et à la hauteur désirée par le passager (Fig. 1 et Figure 2) ;
**caractérisée en ce que**
le soutien par une surface douce, d'une ou de plusieurs grande(s) partie(s) de la tête, du torse et des cuisses du côté du passager dans la direction de déplacement du véhicule en cas de décélération rapide du véhicule suivant son axe de déplacement, réduisant en conséquence la force par unité de surface sur le corps dudit passager en décélérant ce passager pendant ladite décélération du véhicule.

10. Une méthode pour permettre à un passager de prendre place dans un véhicule en toute sécurité comme à la revendication 9, comprenant également le soutien de ce passager en direction verticale en cas d'accélération dudit véhicule sur une direction vers le bas.

11. Une structure selon la revendication 1, ladite structure étant soutenue par un support du véhicule fixé audit véhicule, et comprenant au moins une tablette montée sur le support du véhicule de ladite structure, et l'inclinaison de cette tablette étant maintenue à l'horizontale par rapport audit véhicule.

12. Une multitude de structures suivant la revendication 1, par lesquelles ces structures (114) ont chacune une partie supérieure orientée vers la tête du passager et une partie inférieure orienté vers les pieds du passager et un axe d'orientation dirigé de l'extrémité inférieure desdites structures vers l'extrémité supérieure de cette structure, chacune de ces structures étant orientée avec leur axe substantiellement parallèles les uns aux autres et lesdites structures étant orientées de façon à être mises en place dans le véhicule.

13. Une structure selon la revendication 12, suivant laquelle ces structures sont positionnées au sein de cette disposition, de façon à ce que les passagers aient un accès indépendant à ladite structure à partir des zones traditionnelles du véhicule, sans faire incursion dans la structure des autres passagers, donc sans compromettre la posture préférée de tout autre passager dans leur structure respective dudit véhicule.

14. Une multitude de structures selon la revendication 12, par lesquelles ces structures en place 114 sont également emboîtées verticalement dans une multitude de rangées avec lesdites extrémités supérieures desdites structures dans chaque rangée substantiellement proches des extrémités supérieures des structures des autres rangées et avec les extrémités inférieures des structures de chaque rangée substantiellement proches des extrémités inférieures des structures des autres rangées (Fig. 5 et Fig. 6).

15. Une multitude de structures selon la revendication 12, par lesquelles les axes desdites structures de l'extrémité inférieure à l'extrémité supérieure desdites structures sont disposés suivant un angle prédéterminé dans la direction de déplacement du véhicule, lesdites structures (114) étant orientées de façon à positionner la tête du passager en-deçà des pieds du passager par rapport à la direction de déplacement du véhicule lorsque ledit passager est en position normale dans la structure (Fig.4).

16. Deux jeux de structures selon la revendication 14, les deux jeux de structures étant disposés dos à dos avec les extrémités inférieures du premier desdits deux jeux de structures substantiellement jointes aux extrémités inférieures du second des deux jeux de structures ou avec les extrémités supérieures de la première des deux jeux de structures substantiellement jointes aux extrémités supérieures du second des deux jeux de structures, et lesdits deux jeux de structures étant substantiellement à un niveau horizontal, en conséquence de quoi lesdits deux jeux de structures forment des familles de couchettes le long de l'axe du véhicule.

17. Une structure selon la revendication 15, dans laquelle l'angle prédéterminé est de 90 degrés.

18. Deux structures selon la revendication 15, les deux structures étant disposées dos à dos avec les extrémités inférieures de la première des deux structures substantiellement jointes aux extrémités inférieures de la seconde des deux structures de façon à ce que l'angle prédéterminé permette à la surface de contact des structures qui sont dos à dos d'être plus en avant par rapport à la direction de déplacement du véhicule que les deux autres extrémités des structures dans chacune desdites deux structures (comme à la Fig. 4), garantissant ainsi qu'en cas de décélération rapide du véhicule, lesdits passagers soient poussés dans leurs structures plutôt qu'éjectés en dehors de ces structures.

19. Une structure selon la revendication 1, orientée dans ledit véhicule de façon à ce que lorsque le passager se trouve dans la structure, la tête de ce passager soit située derrière les pieds dudit passager en direction axiale par rapport au sens de déplacement du véhicule en condition normale, et ladite structure ayant un protège-pieds monté sur le bord de ladite structure face aux pieds dudit passager, en conséquence de quoi en cas de rapide décélération du véhicule, ledit passager est soutenu par des systèmes de sécurité qui comprennent ledit protège-pieds.

20. Un véhicule avec une multitude de structures selon la revendication 14, ledit véhicule comprenant des vitres sur sa carrosserie au-dessus de la rangée supérieure desdites rangées des structures, créant ainsi un auvent de structures sur la rangée supérieure.

21. Une multitude de structures selon la revendication 14, fixées au châssis et aux traverses, comprenant également des échelons montés sur le châssis et sur les traverses, permettant ainsi aux passagers de monter dans les couchettes les plus hautes de ces rangées.

22. Une structure selon la revendication 13, comprenant également au moins un volet rétractable positionné à l'entrée de la structure, permettant ainsi une ou plusieurs des fonctions suivantes :
a) une tablette supplémentaire ;
b) un strapontin utilisable en entrant dans cet habitat.

23. Une multitude de structures selon la revendication 14, par lesquelles le déplacement horizontal et vertical des structures les unes par rapport aux autres dans lesdites rangées avec dispositions emboîtées, est prévu de façon à réduire au minimum le volume interne requis par lesdites structures dudit véhicule.

24. Une multitude de structures selon la revendication 16, disposées en rangées avec les structures du châssis, et montées sur des systèmes verrouillables qui lorsqu'on les déverrouille, permettent le mouvement desdites structures du châssis dans le véhicule et hors des portes du véhicule.

25. Rangées de familles de structures soutenues par ladite structure du châssis comme à la revendication 14, ladite structure du châssis avec des structures qui y sont montées peut être amenée sur roue dans des véhicules adéquats dans et au dehors d'au moins une installation de service aux passagers dans les aéroports et dans les aéronefs, permettant aux passagers de ne pas descendre de leurs structures, et de réaliser toutes leurs liaisons à partir desdites structures.

26. Rangées de familles de structures comme à la revendication 25, avec des racks à bagage pour chacun des passagers montés à côté de la structure dudit passager, facilitant ainsi la manutention des bagages avec les mouvements des passagers.

27. Une multitude de structures montées dans des châssis comme sur la revendication 24, ladite multitude de structures étant montée de manière interchangeable dans les véhicules avec un conteneur de marchandises, et d'autres systèmes de service aux passagers comme les chariots, les toilettes ou les salons.

28. Une pluralité de structures comme à la revendication 24, cette pluralité de structures comprenant également au moins un des systèmes de parachutes et un radeau de sécurité qui protègeront ladite pluralité de structures sous la forme d'une unité complète en cas d'urgence, de façon à ce que la pluralité des structures puisse être déverrouillée et éjectée du véhicule en cas de crise y compris les cas d'urgence.

29. Une structure selon la revendication 1 par laquelle ce véhicule est un aéronef.

30. Une structure selon la revendication 1, comprenant également au moins une console de services, remplissant au moins une des fonctions suivantes :
a) alimentation en air indépendante
b) écran vidéo
c) connexion casque audio
d) connexion écran vidéo
e) téléphone
f) intercom audio/vidéo
g) indicateurs du statut de l'avion
h) lampes ; et
i) caméra de visio-conférence et son système

31. Une multitude de structures comme à la revendication 16, lesdites structures étant positionnées relativement dans chacune desdites familles pour faciliter la communication entre les passagers face à face et latéralement par dessus les structures voisines, facilitant ainsi une conférence.

32. Une multitude de structures comme à la revendication 12, dans un véhicule comprenant également des zones supplémentaires du véhicule qui sont communes aux passagers, appelées salons, lesdits salons procurant une série de services que les passagers désirent utiliser pendant le vol.
